# EUROPEAN PATENT SPECIFICATION

(11) **EP 0 549 990 B1**
(45) Date of publication and mention of the grant of the patent: **19.11.1997**
(21) Application number: 92121698.2
(22) Date of filing: 21.12.1992
(51) Int. Cl.: G11B 7/00, G06K 19/06, G06K 19/16, G06K 7/10

(54) **Method of reading hologram information**
Verfahren zum Lesen holographischer Information
Méthode de lecture d'information holographique

(30) Priority: 20.12.1991 JP 338783/91
(43) Date of publication of application: 07.07.1993
(73) Proprietor: DAI NIPPON PRINTING CO., LTD., Tokyo 162 (JP)
(72) Inventor: Yamazaki, Satoshi, c/o Dai Nippon Printing Co. Ltd, Tokyo 141 (JP)
(74) Representative: VOSSIUS & PARTNER

(56) References cited:
- EP-A- 0 043 509
- US-A- 4 295 162
- US-A- 4 677 285
- US-A- 4 820 006
- PHOTOGRAPHIC SCIENCE AND ENGINEERING vol. 10, no. 4, August 1966, WASHINGTON US pages 209-213 R.L. LAMBERTS ET AL "digital data recording on film by using superposed grating patterns. 1. General theory and procedures"
- PROCEEDINGS OF THE CONFERENCE ON VIDEO AND DATA RECORDING 27 July 1979, UNIVERSITY OF SOUTHAMPTON, HANTS, UK pages 329 - 338 K. HACKING 'some experiments in digital holographic recording'

## Description

The present invention relates to a method of photoelectrically reading information recorded in the form of holograms. More particularly, the present invention relates to a hologram information reading method which is less affected by scratches, stains, etc. on the hologram surface.

The present applicant has proposed in JP-A-5-204289 and JP-A-6-88905 a hologram information reading method wherein a beam of light having a small beam diameter is applied to a hologram containing the record of bar code-shaped patterns to thereby reconstruct the recorded patterns. When a hologram is reconstructed by illuminating it with a light beam having a small diameter, the depth of focus of the reconstructed image increases, resulting in a reduction in the dependence of the resolution of the reconstructed image on the light detecting position. Thus, such a reading method is advantageous in that the number of restrictions on the installation position of the read sensor decreases.

However, when the reconstructing light is a light beam having a small diameter, if there is a scratch, a stain or the like in the illuminated region on the hologram surface, no diffracted light may be obtained, or the quantity of diffracted light may be reduced. Therefore, there is likelihood that the recorded information will be impossible to read or it will be read erroneously.

From Proceedings of the conference on video and data recording, 24 to 27 July 1979, University of Southampton, Hampshire, England, pages 329 to 337, K. Hacking, "Some experiments in digital holographic recording" a method of photoelectrically reading information recorded in the form of a Fresnel hologram is known wherein the method comprises illuminating a hologram surface by scanning it with a beam of light having a cross-section smaller than the hologram region in a direction transverse to the direction of movement of the recording medium.

In view of the above-described circumstances, it is an object of the present invention to provide a hologram information reading method wherein when a hologram is illuminated with a beam of light having a small diameter to reconstruct information recorded thereon, the light beam is moved to scan the hologram surface, thereby eliminating the effect on the reading accuracy of a scratch, a stain, etc., on the hologram surface.

To attain the above-described object, the present invention provides a method of photoelectrically reading information recorded in the form of a Fresnel hologram, wherein the hologram surface is illuminated by scanning it in a direction transverse to the direction of a movement of said hologram and with a beam of light having a cross-section smaller than the hologram wherein the same recorded information is reconstructed and read separately from different illuminating regions of the hologram.

Preferably, the recorded information is a pattern comprising a plurality of parallel bars, for example, and the light beam is moved to scan in a direction parallel to each bar. The hologram may be provided on a card.

It is also possible to detect zero-order diffracted light from the hologram and to sense a hole punched in the hologram from the interrupting time of the zero-order diffracted light simultaneously with the reading of the recorded information. In such a case, it is possible to judge whether the card is genuine or a forgery from the presence or absence of the hole.

According to the present invention, the hologram surface is illuminated by scanning it with a light beam having a cross-section smaller than the hologram thereby reconstructing and reading the same recorded information separately from different illuminating regions. Therefore, even if there is a scratch or a stain in a specific illuminated region on the hologram, since the beam of illuminating light also illuminates scratch- or stain- free portions in the neighborhood of the specific region before and after it to reconstruct the recorded information, it is possible to compensate for momentary disability to reconstruct the recorded information due to the scratch or stain. At the same time, since a light beam having a small beam diameter is used for reconstruction, the depth of focus of the reconstructed image increases, so that the number of restrictions on the installation position of the read sensor decreases.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

Fig. 1 is a perspective view showing a method of reading a card provided with a Fresnel hologram containing the record of a bar code.

Fig. 2 shows a waveform of one example of a signal obtained by the reading method shown in Fig. 1.

Fig. 3 shows schematically the arrangement of an optical system for carrying out one embodiment of the reading method according to the present invention.

Fig. 4 shows schematically the arrangement of an optical system for carrying out another embodiment of reading method according to the present invention.

The hologram information reading method of the present invention will be described below by way of embodiments and with reference to the accompanying drawings.

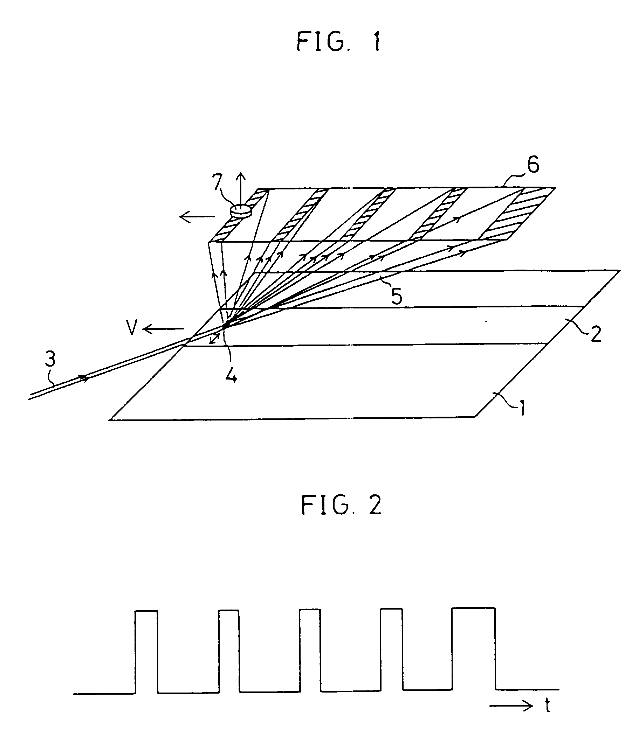

Fig. 1 is a perspective view showing a method of reading a card provided with a Fresnel hologram containing the record of a bar code. A card 1 has a Fresnel hologram 2, which contains the record of a bar code, attached to a stripe region thereof. The surface of the hologram 2 is illuminated with a beam of reconstructing light 3 having a small beam diameter. Diffracted light 5 from a minute illuminating region 4 reconstructs a bar code pattern 6 having bars extending across the stripe region 2. When the card 1 is fed in the longitudinal direction of the stripe region 2 with the reconstructing light 3 fixed, the reconstructed bar code pattern 6 also moves in the same direction. Therefore, if a light-receiving element 7 is disposed at the position where the bar code pattern 6 is reconstructed, a read signal such as that shown in Fig. 2 is obtained as the card 1 moves.

Thus, the bar code recorded on the hologram 2 can be read. However, if there is a scratch or a stain in the illuminating region 4, no diffracted light 5 may be obtained. There is therefore likelihood that the bar code pattern 6 will be impossible to read accurately. Therefore, in the present invention, the reading operation is carried out by moving the illuminating region 4 so as to scan in a direction perpendicular to the direction of movement of the card 1, as shown by the double-headed arrow in Fig. 1.

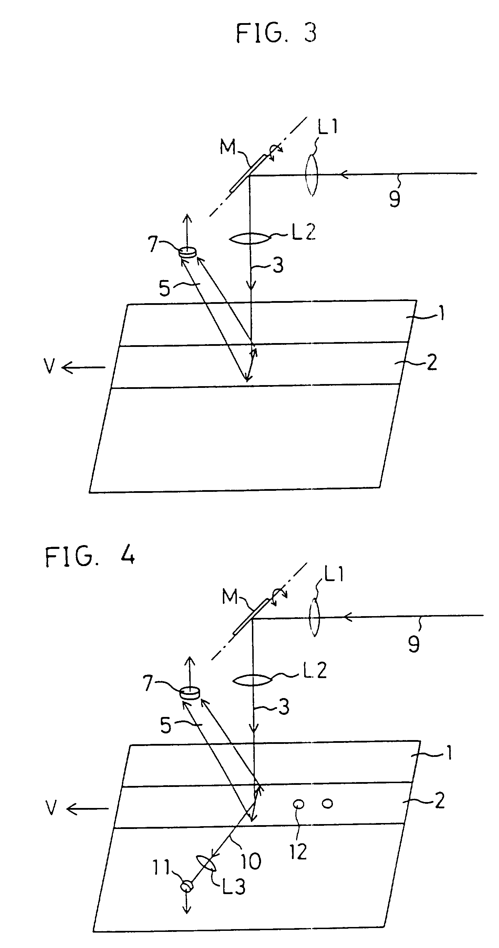

Fig. 3 shows the arrangement of one example of an optical system for reading hologram information by moving the illuminating region 4 of reconstructing light in a scanning manner. A card 1 has a Fresnel hologram 2, which contains the record of a bar code, attached to a stripe region thereof, and the bars of a bar code pattern reconstructed from the hologram 2 extend across the stripe region 2, in the same way as in the case of the arrangement shown in Fig. 1. The card 1 is fed at speed V in the longitudinal direction of the stripe region 2. Reconstructing light 3, which is to be applied to the hologram 2, is formed by first condensing a narrowed-down beam of parallel rays 9 through a lens L1, reflecting the beam 9 by using a galvanomirror M, which is disposed at the focal point of the lens L1, and then converting the divergent light, which is reflected from the galvanomirror M, into a narrow beam of parallel rays through a lens L2. By oscillating the galvanomirror M as shown in the figure, the reconstructing light 3 scans the surface of the hologram 2 in a direction perpendicular to the direction of movement of the card 1. The scanning speed is set at a much higher level than the speed V of movement of the card 1.

Even if there is a scratch or a stain in a specific illuminated region on the hologram 2, since the reconstructing light 3 also illuminates scratch- or stain-free portions in the neighborhood of the specific region before and after it during the scanning operation, the bar code pattern is successfully reconstructed by virtue of the redundancy of the hologram 2 and read by the light-receiving element 7. In other words, since a large number of points on the hologram 2 are read by scanning it with reconstructing light 3 having a small beam diameter, it is possible to compensate for momentary disability to reconstruct the recorded information due to a scratch or a stain. In addition, since a light beam having a small diameter is used for reconstruction, the reconstructed image is unlikely to be out of focus. Thus, it is possible to obtain satisfactorily sharp reconstructed images at all times.

Incidentally, according to the above-described reading method, it is possible to read hologram information and, at the same time, detect a hole which may be punched in the hologram region 2 of a prepaid card, for example, to record and display a number of times of use or other information. For this purpose, a lens L3, and a light-receiving element 11, which is provided at the focal point of the lens L3, are disposed so as to detect zero-order diffracted light 10 regularly reflected from the hologram 2, as shown exemplarily in Fig. 4. If the hologram 2 is provided with a punched hole 12, no zero-order diffracted light 10 is available for a predetermined period of time, which is determined by the diameter of the punched hole 12. Therefore, the punched hole 12 can be recognized by detecting the absence of the zero-order diffracted light 10 from the signal obtained from the light-receiving element 11. It should be noted that the punched hole 12 can be distinguished from a scratch or a stain by detecting the interrupting time of the signal obtained from the light-receiving element 11.

The Fresnel hologram, which is employed in the present invention, is preferably recorded in the form of relief dimple patterns, because with this recording form a large number of holograms can be duplicated at relatively low cost and, further, the angle of incidence of reconstructing light applied to reconstruct the hologram image is less dependent on the angle of incidence of reference light applied during the photographic recording of the hologram. To record a hologram in the form of relief dimple patterns, a photoresist, for example, Bichroposit 1300, available from Supray (U.S.A.), or OFPR, available from Tokyo Applied Chemistry Co., Ltd., may be used as a photosensitive material. On the photosensitive material, a distribution of light intensities corresponding to interference fringes produced by interference between object light and reference light is recorded in the form of relief dimple patterns, thereby forming a relief hologram. Then, the relief surface is plated with nickel, for example, to produce a relief stamper, with which an emboss hologram is duplicated by a known method. Then, Al, ZnS, or TiO₂, is deposited on the dimple pattern surface of the duplicate to form a reflecting layer, thereby obtaining the desired hologram.

Although the hologram information reading method of the present invention has been described by way of an example in which the present invention is applied to reading of a Fresnel hologram containing the record of a bar code, it should be noted that the present invention may also be applied to reading of holograms containing the record of various other information. In addition, any kind of information may be recorded on holograms concerned with the reading method of the present invention, for example, information used to judge whether the card concerned is genuine or a forgery. Cards which may be provided with holograms include various kinds of card, for example, cash dispenser cards, prepaid cards, commuter passes, etc.

## Claims

1. A method of photoelectrically reading information recorded in the form of a Fresnel hologram (2), said method comprising illuminating a hologram surface by scanning it in a direction transverse to the direction of a movement of said hologram and with a beam of light (3) having a cross-section smaller than said hologram characterized in that the same recorded information is reconstructed and read separately from different illuminating regions (4) of the hologram.

2. A method according to Claim 1, wherein said recorded information is a pattern (6) comprising a plurality of parallel bars, and said light beam is moved to scan in a direction parallel to each bar.

3. A method according to Claim 1 or 2, wherein said hologram (2) is provided on a card (1).

4. A method according to any one of Claim 1 to 3, wherein zero-order diffracted light (10) from said hologram is detected to sense a hole (12) punched in said hologram (2) from an interrupting time of the zero-order diffracted light (10) simultaneously with the reading of said recorded information.

5. A method according to Claim 4, wherein whether the card is genuine or a forgery is judged from the presence or absence of said hole (12) punched in said hologram (2).

## Patentansprüche

1. Verfahren zum photoelektrischen Lesen von Information, die in Form eines Fresnel-Hologramms (2) aufgezeichnet worden ist, wobei das Verfahren das Beleuchten einer Hologrammoberfläche durch Abtasten derselben in einer Richtung quer zu der Bewegungsrichtung des Hologramms und mit einem Lichtstrahl (3) mit einem kleineren Querschnitt als dem des Hologramms aufweist, dadurch gekennzeichnet, daß dieselbe aufgezeichnete Information getrennt von verschiedenen Beleuchtungsbereichen (4) des Hologramms rekonstruiert und gelesen wird.

2. Verfahren nach Anspruch 1, wobei die aufgezeichnete Information ein Muster (6) ist, das eine Vielzahl von parallelen Strichen aufweist, und der Lichtstrahl bewegt wird, um in einer Richtung parallel zu jedem Strich abzutasten.

3. Verfahren nach Anspruch 1 oder 2, wobei das Hologramm (2) auf einer Karte (1) bereitgestellt ist.

4. Verfahren nach einem der Ansprüche 1 bis 3, wobei abgelenktes Licht (10) nullter Ordnung von dem Hologramm erfaßt wird, um ein in das Hologramm (2) gestanztes Loch (12) festzustellen und zwar aus einer Unterbrechungszeit des abgelenkten Lichts (10) nullter Ordnung gleichzeitig mit dem Lesen der aufgezeichneten Information.

5. Verfahren nach Anspruch 4, wobei aus dem Vorhandensein oder dem Fehlen des Lochs (12), welches in das Hologramm (2) gestanzt ist, beurteilt wird, ob die Karte echt oder eine Fälschung ist.

## Revendications

1. Un procédé de lecture photoélectrique d'une information enregistrée sous la forme d'un hologramme de Fresnel (2) , ledit procédé comprenant l' étape consistant à éclairer une surface d'hologramme en la balayant dans une direction transversale à la direction d'un déplacement dudit hologramme et au moyen d'un faisceau lumineux (3) à section transversale inférieure audit hologramme, caractérisé en ce que la même information enregistrée est reconstruite et lue séparément dans différents régions (4) d'éclairage de l'hologramme.

2. Un procédé selon la revendication 1, dans lequel ladite information enregistrée est une configuration (6) comprenant une série de barres parallèles, et ledit faisceau lumineux est déplacé de façon à balayer dans une direction parallèle à chaque barre.

3. Un procédé selon la revendication 1 ou 2, dans lequel ledit hologramme (2) est agencé sur une carte (1).

4. Un procédé selon l'une quelconque des revendications 1 à 3, dans lequel une lumière diffractée (10) d'ordre zéro provenant dudit hologramme est détectée afin de percevoir, simultanément avec la lecture de ladite information enregistrée, un orifice (12) perforé dans ledit hologramme (2) à partir d'un temps d'interruption de la lumière diffractée (10) d'ordre zéro.

5. Un procédé selon la revendication 4, dans lequel il est estimé si la carte est authentique ou frauduleuse à partir de la présence ou de l'absence dudit orifice (12) perforé dans ledit hologramme (2).
